(19)

Europäisches
Patentamt
European
Patent Office
Office européen
des brevets

(11) **EP 4 394 476 A1**

(12) **EUROPEAN PATENT APPLICATION**
published in accordance with Art. 153(4) EPC

(43) Date of publication:
**03.07.2024 Bulletin 2024/27**

(21) Application number: **22888816.0**

(22) Date of filing: **26.05.2022**

(51) International Patent Classification (IPC):
**G02B 13/22** (2006.01)    **G02B 13/00** (2006.01)

(86) International application number:
**PCT/CN2022/095226**

(87) International publication number:
**WO 2023/077780 (11.05.2023 Gazette 2023/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.11.2021 CN 202111296200**

(71) Applicant: **Opt Machine Vision Tech Co., Ltd.
Dongguan, Guangdong 523000 (CN)**

(72) Inventors:
• **HE, Yanfang**
  **Chang'an Town Dongguan, Guangdong 523000
  (CN)**
• **CHEN, Jianwei**
  **Chang'an Town Dongguan, Guangdong 523000
  (CN)**
• **ZENG, Zhenhuang**
  **Chang'an Town Dongguan, Guangdong 523000
  (CN)**
• **LU, Shenglin**
  **Chang'an Town Dongguan, Guangdong 523000
  (CN)**

(74) Representative: **Zacco Sweden AB
P.O. Box 5581
Löjtnantsgatan 21
114 85 Stockholm (SE)**

(54) **TELECENTRIC LENS**

(57)    Provided is a telecentric lens system. The lens system includes a front group (T1), a middle group (P), a diaphragm (S), and a rear group (T2). The front group (T1), the middle group (P), the diaphragm (S) and the rear group (T2) are sequentially arranged from an object plane side of the telecentric lens system to an image plane side of the telecentric lens system. The front group (T1) has positive focal power, the rear group (T2) has negative focal power, and the diaphragm (S) is located on an image focal plane of the front group (T1). A focal length of the lens is f, a focal length of the front group (T1) is $f_{T1}$, a focal length of the rear group (T2) is $f_{T2}$, and $f_{T1}$ and $f_{T2}$ separately satisfy the following relationships with f: $0.80 < |f_{T1}/f| < 1.20$, and $3.00 < |f_{T2}/f| < 4.00$. The present disclosure provides a telecentric lens system, through the organic combination of optical elements such as the front group, the middle group, the diaphragm, and the rear group, can simultaneously have the advantages of high magnification, high resolution, low distortion, and a large aperture. The telecentric lens system is particularly suitable for the precision detection field and is suitable for large-scale promotion and application.

**FIG. 1**

EP 4 394 476 A1

**Description**

TECHNICAL FIELD

The present disclosure relates to the technical field of optical imaging, and in particular, to a telecentric lens system.

BACKGROUND

In the process of precision machining and manufacturing, products need to be positioned and detected. In the positioning and detection process, image acquisition needs to be performed on the products by using industrial lenses. Therefore, industrial lenses play a very important role in the machine vision system.

At present, with the widespread application of the machine vision system in the field of precision detection, ordinary industrial lenses are no longer able to meet the detection requirements. For example, when ordinary industrial lenses are used for image acquisition, significant distortion of ordinary industrial lenses will cause deformation of the acquired image, thereby affecting the positioning precision and detection precision of the product. To compensate for the shortcomings of ordinary industrial lenses and adapt to high-precision positioning and detection requirements, telecentric lenses have emerged.

Telecentric lenses, based on the unique optical characteristics such as high resolution, ultrawide depth of field, ultra-low distortion and unique collimated light design, have brought a qualitative leap to the performance of the machine vision system in the field of precision detection. Telecentric lenses can enlarge the obtained image within a certain object distance range without changing the magnification and thus are very suitable for the field of precision detection. However, in the related art, high-resolution telecentric lenses, limited by design difficulties, have problems of small apertures and low resolution, which also limits the detection precision of telecentric lenses.

Therefore, it is particularly urgent to develop a telecentric lens system with high magnification, a large aperture and high-resolution performance.

The preceding information is provided as background information only for the purpose of assisting in understanding the present disclosure, and it is not determined or acknowledged whether any of the preceding content can be used as the related art relative to the present disclosure.

SUMMARY

The present disclosure provides a telecentric lens system to solve the shortcomings of the related art.

To achieve the preceding object, the present disclosure provides solutions described below.

A telecentric lens system is provided and includes a front group T1, a middle group P, a diaphragm S and a rear group T2.

The front group T1, the middle group P, the diaphragm S and the rear group T2 are sequentially arranged from an object plane side of the telecentric lens system to an image plane side of the telecentric lens system.

The front group T1 has positive focal power, the rear group T2 has negative focal power, and the diaphragm S is located on an image focal plane of the front group T1.

A focal length of the telecentric lens system is f, a focal length of the front group T1 is $f_{T1}$, and a focal length of the rear group T2 is $f_{T2}$, and $f_{T1}$ and $f_{T2}$ separately satisfy following relationships with f:

$$0.80 < |f_{T1}/f| < 1.20, \; 3.00 < |f_{T2}/f| < 4.00.$$

Further, in the telecentric lens system, the middle group P is a splitting prism or a flat lens.

Further, in the telecentric lens system, the front group T1 includes a first lens G1, a second lens G2, a third lens G3, a fourth lens G4, a fifth lens G5 and a sixth lens G6.

The first lens G1, the second lens G2, the fourth lens G4 and the sixth lens G6 each have positive focal power and a biconvex structure, and the third lens G3 and the fifth lens G5 each have negative focal power and a biconcave structure.

The second lens G2 and the third lens G3 are cemented together to form a first cemented lens group U1 having negative focal power.

The fourth lens G4 and the fifth lens G5 are cemented together to form a second cemented lens group U2 having positive focal power.

Further, in the telecentric lens system, the rear group T2 includes a seventh lens G7 and an eighth lens G8.

The seventh lens G7 has negative focal power and a biconcave structure, and the eighth lens G8 has positive focal power and a biconvex structure.

Further, in the telecentric lens system, a distance L from a front surface vertex of the first lens G1 to a rear surface vertex of the eighth lens G8 satisfies the following relationship with f:

$$|L/f| > 1.70.$$

Further, in the telecentric lens system, a back focal length (BFL) from the rear surface vertex of the eighth lens G8 to an image plane satisfies the following relationship with f:

$$|BFL/f| < 0.50.$$

Further, in the telecentric lens system, a half image height y' of the telecentric lens system satisfies the following relationship with f:

$$|y'/f| < 0.20.$$

Further, in the telecentric lens system, a focal length of the first lens G1 is $f_{G1}$, and $f_{G1}$ satisfies the following relationship with f:

$$1.00 < |f_{G1}/f| < 1.40.$$

A focal length of the first cemented lens group U1 is $f_{U1}$, and $f_{U1}$ satisfies the following relationship with f:

$$1.90 < |f_{U1}/f| < 2.40.$$

A focal length of the second cemented lens group U2 is $f_{U2}$, and $f_{U2}$ satisfies the following relationship with f:

$$f: 14.00 < |f_{U2}/f| < 15.00.$$

A focal length of the sixth lens G6 is $f_{G6}$, and $f_{G6}$ satisfies the following relationship with f:

$$1.00 < |f_{G6}/f| < 1.50.$$

A focal length of the seventh lens G7 is $f_{G7}$, and $f_{G7}$ satisfies the following relationship with f:

$$0.20 < |f_{G7}/f| < 0.50.$$

A focal length of the eighth lens G8 is $f_{G8}$, and $f_{G8}$ satisfies the following relationship with f:

$$0.40 < |f_{G8}/f| < 0.80.$$

Further, in the telecentric lens system, the shape of the aperture of the diaphragm S is circular, and the aperture of the diaphragm S is an F7.0 aperture.

Compared with the related art, the present disclosure has the beneficial effects below.

The embodiment of the present disclosure provides a telecentric lens system, which, through the organic combination of optical elements such as the front group, the middle group, the diaphragm and the rear group, can simultaneously have the advantages of high magnification, high resolution, low distortion and a large aperture. The telecentric lens system is particularly suitable for the precision detection field and is suitable for large-scale promotion and application.

BRIEF DESCRIPTION OF DRAWINGS

To illustrate the technical solutions in embodiments of the present disclosure or the technical solutions in the related art more clearly, drawings used in the technical description of the embodiments or the related art will be briefly described below. Apparently, the drawings described below illustrate only part of the embodiments of the present disclosure, and those of ordinary skill in the art may obtain other drawings based on the drawings described below without any creative work.

FIG. 1 is a structural view of a telecentric lens system according to an embodiment of the present disclosure;

FIG. 2 is a light path view of a telecentric lens system according to an embodiment of the present disclosure;

FIG. 3 is a graph showing modulation transfer function (MTF) curves of a telecentric lens system according to an embodiment of the present disclosure, where the MTF of the full field of view approaches the diffraction limit;

FIG. 4 is a graph showing optical distortion curves of a telecentric lens system according to an embodiment of the present disclosure, where the maximum optical distortion within the range of the full field of view is less than 0.2%; and

FIG. 5 is a graph showing the relative illumination of a telecentric lens system according to an embodiment of the present disclosure, where the illumination of the optical system is uniform.

DETAILED DESCRIPTION

To make the purposes, features and advantages of the present disclosure more apparent and easier to understand, the technical solutions in the embodiments of the present disclosure will be described clearly and completely in conjunction with the drawings in the embodiments of the present disclosure. Apparently, the embodiments described below are part, not all, of the embodiments of the present disclosure. Based on the embodiments of the present disclosure, all other embodiments obtained by those of ordinary skill in the art are within the scope of the present disclosure on the premise that no creative work is done.

In the description of the present disclosure, it is to be understood that when a component is described as being "connected" to another component, the component may be directly connected to the particular component, or a centrally disposed component may exist simultaneously. When a component is described as being "disposed on" another component, the component may be directly disposed on the particular component or a centrally disposed component may exist simultaneously.

In addition, orientation or positional relationships indicated by terms such as "long", "short", "inside" and "outside" are orientation or positional relationships illustrated based on the drawings, only for the convenience of describing the present disclosure, and not to indicate or imply that the device or element referred to must have the specific orientation or be constructed in the specific orientation to operate, which cannot be understood as limiting the present disclosure.

Technical solutions of the present disclosure are further described hereinafter in conjunction with the drawings and the embodiments.

Embodiment one

Given the shortcomings of the existing telecentric lenses mentioned above, the applicant actively conducts research and innovation based on years of practical experience and professional knowledge in the design and manufacturing of such products and in conjunction with the application of science, hoping to create technologies that can solve the shortcomings in the existing technology and making the telecentric lens system more practical. After continuous research and design and repeated trial samples and improvements, the present disclosure has finally been created with practical values.

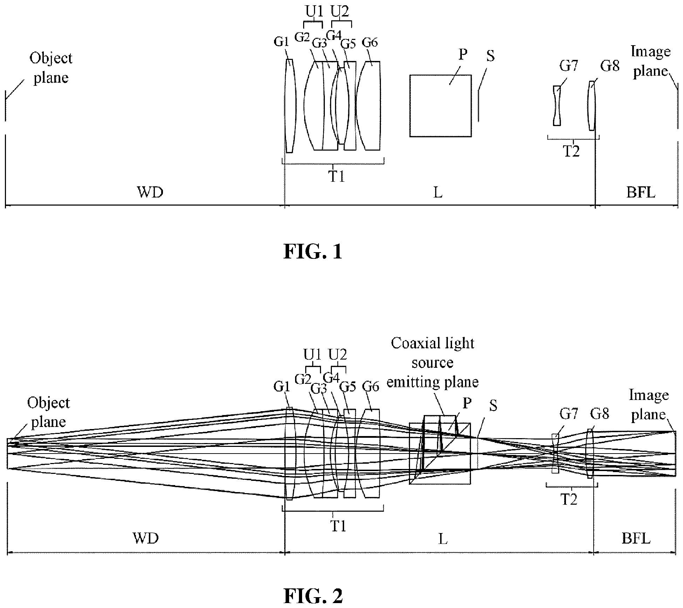

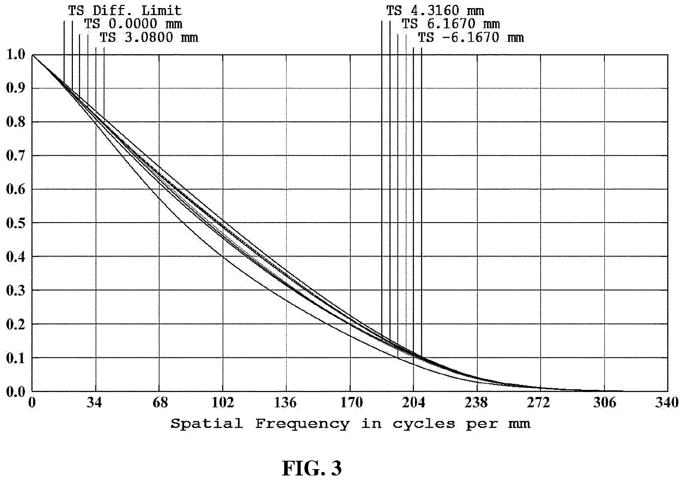

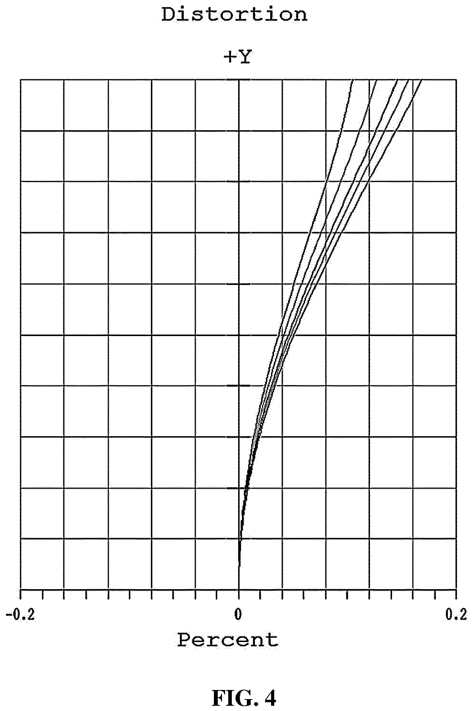

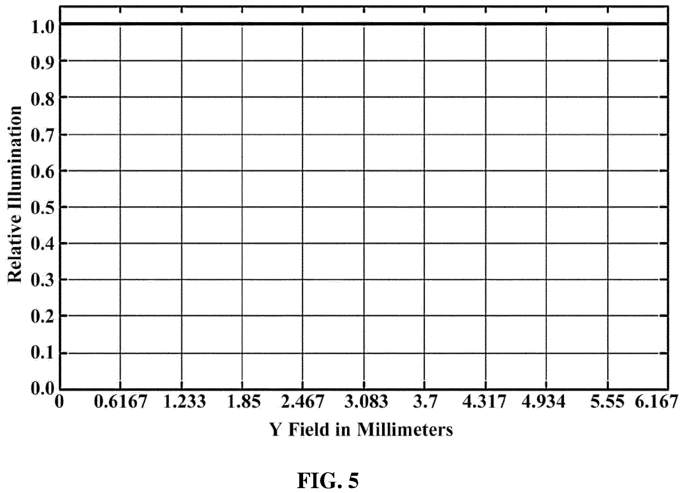

Referring to FIG. 1 to FIG. 5, an embodiment of the present disclosure provides a telecentric lens system, and the lens system includes a front group T1, a middle group P, a diaphragm S and a rear group T2.

The front group T1, the middle group P, the diaphragm S and the rear group T2 are sequentially arranged from an object plane side of the telecentric lens system to an image plane side of the telecentric lens system.

The front group T1 has positive focal power, the rear group T2 has negative focal power, and the diaphragm S is located on an image focal plane of the front group T1.

A focal length of the lens system is f, a focal length of the front group T1 is $f_{T1}$, a focal length of the rear group T2 is $f_{T2}$, and $f_{T1}$ and $f_{T2}$ separately satisfy following relationships with f:

$$0.80 < |f_{T1}/f| < 1.20, \text{ and } 3.00 < |f_{T2}/f| < 4.00.$$

In the embodiment, the middle group P is a splitting prism or a flat lens.

If the middle group P is a splitting prism, the middle group P may be introduced into a coaxial illumination source or other optical systems.

If the middle group P is a flat lens, the middle group P is used for compensating for the optical path difference of a non-coaxial product of the present disclosure.

Optionally, the front group T1 includes a first lens G1, a second lens G2, a third lens G3, a fourth lens G4, a fifth lens G5 and a sixth lens G6.

The first lens G1, the second lens G2, the fourth lens G4 and the sixth lens G6 each have positive focal power and a biconvex structure, and the third lens G3 and the fifth lens G5 each have negative focal power and a biconcave structure.

The second lens G2 and the third lens G3 are cemented together to form a first cemented lens group U1 having negative focal power.

The fourth lens G4 and the fifth lens G5 are cemented together to form a second cemented lens group U2 having positive focal power.

In the embodiment, the rear group T2 includes a seventh lens G7 and an eighth lens G8.

The seventh lens G7 has negative focal power and a biconcave structure, and the eighth lens G8 has positive focal power and a biconvex structure.

Preferably, a distance L from a front surface vertex of the first lens G1 to a rear surface vertex of the eighth lens G8 satisfies the following relationship with f:

$$|L/f| > 1.70.$$

In the embodiment, a back focal length (BFL) from the rear surface vertex of the eighth lens G8 to an image plane satisfies the following relationship with f:

$$|BFL/f| < 0.50.$$

Preferably, a half image height y' of the lens system satisfies the following relationship with f:

$$|y'/f| < 0.20.$$

In the embodiment, a focal length of the first lens G1 is $f_{G1}$, and $f_{G1}$ satisfies the following relationship with f:

$$1.00 < |f_{G1}/f| < 1.40.$$

A focal length of the first cemented lens group U1 is $f_{U1}$, and $f_{U1}$ satisfies the following relationship with f:

$$1.90 < |f_{U1}/f| < 2.40.$$

A focal length of the second cemented lens group U2 is $f_{U2}$, and $f_{U2}$ satisfies the following relationship with f: $14.00 < |f_{U2}/f| < 15.00$.

A focal length of the sixth lens G6 is $f_{G6}$, and $f_{G6}$ satisfies the following relationship with f:

$$1.00 < |f_{G6}/f| < 1.50.$$

A focal length of the seventh lens G7 is $f_{G7}$, and $f_{G7}$ satisfies the following relationship with f:

$$0.20 < |f_{G7}/f| < 0.50.$$

A focal length of the eighth lens G8 is $f_{G8}$, and $f_{G8}$ satisfies the following relationship with f:

$$0.40 < |f_{G8}/f| < 0.80.$$

Preferably, the shape of the aperture of the diaphragm S is circular, and the aperture of the diaphragm S is an F7.0 aperture.

A working distance (WD) of the lens system is 110mm.

In the embodiment, the specific data of various optical elements in the lens system may be shown in Table 1 below as an example.

Table 1

| Surface | Radius (mm) | Thickness (mm) | Refractiv e index |
|---|---|---|---|
| Image plane | Plane | 110 | / |
| Front surface of G1 | 206.6 | 4.7 | 1.9 |
| Rear surface of G1 | -111.1 | 3.2 | / |
| Front surface of U1 | 40.7 | 8.3 | 1.5 |
| Cemented surface of U1 | -189.3 | 2.5 | 1.7 |
| Rear surface of U1 | 38.2 | 2.0 | / |
| Front surface of U2 | 79.7 | 5.5 | 1.5 |
| Cemented surface of U2 | -62.0 | 2.5 | 1.7 |
| Rear surface of U2 | 530.7 | 0.4 | / |
| Front surface of G6 | 44.00 | 10.0 | 1.5 |
| Rear surface of G6 | -590.1 | 12.1 | / |
| Front surface of prism P | Plane | 25.0 | 1.5 |
| Rear surface of prism P | Plane | 3.0 | / |
| Diaphragm S | Plane | 31.5 | / |
| Front surface of G7 | -21.4 | 1.4 | 1.5 |
| Rear surface of G7 | 40.0 | 11.6 | / |
| Front surface of G8 | 58.5 | 3.2 | 1.8 |
| Rear surface of G8 | -87.3 | 33.7 | / |
| Image plane | Plane | / | / |

In the embodiment, the focal length of the lens system, that is, f, may be 70.23mm, the aperture is F# and is 7.0, the focal length fri of the front group T1 may be 57.21mm, the focal length $f_{T2}$ of the rear group T2 may be -273.01mm, the distance L from the front surface vertex of the first lens G1 to the rear surface vertex of the eighth lens G8 may be 126.9mm, the back focal length (BFL) may be 33.7mm, the half image height y' may be 9.26mm, the focal length $f_{G1}$ of the first lens G1 may be 77.98mm, the focal length $f_{U1}$ of the first cemented lens group U1 may be -146.11mm, the focal length $f_{U2}$ of the second cemented lens group U2 may be 1031.99mm, the focal length $f_{G6}$ of the sixth lens G6 may be 82.56mm, the focal length $f_{G7}$ of the seventh lens G7 may be -26.64mm, and the focal length $f_{G8}$ of the eighth lens G8 may be 43.86mm.

Various relationships are listed below.

$$|f_{T1}/f| = 0.81; \quad |f_{T2}/f| = 3.89; \quad |L/f| = 1.81;$$

$$|BFL/f| = 0.48; \quad |y'/f| = 0.13; \quad |f_{G1}/f| = 1.11; \quad |f_{U1}/f| = 2.08;$$

$$|f_{U2}/f|=14.69; \quad |f_{G6}/f|=1.18; \quad |f_{G7}/f|=0.38; \quad |f_{G8}/f|=0.62.$$

Although terms such as the front group, the middle group, the diaphragm and the rear group are used herein, the possibility of using other terms is not excluded. The use of these terms is only for the purpose of more conveniently describing and explaining the essence of the present disclosure; interpreting them as any additional limitation is contrary to the spirit of the present disclosure.

The embodiment of the present disclosure provides a telecentric lens system, which, through the organic combination of optical elements such as the front group, the middle group, the diaphragm and the rear group, can simultaneously have the advantages of high magnification, high resolution, low distortion and a large aperture. The telecentric lens system is particularly suitable for the precision detection field and is suitable for large-scale promotion and application.

At this point, the description of the preceding embodiments is provided for the purpose of illustration and description and does not imply exhausting or limiting the present disclosure. Individual elements or features of specific embodiments are usually not limited by specific embodiments, but when applicable, can be interchanged and used for selected embodiments even if not specifically shown or described. In many aspects, the same elements or features may also be changed. This change is not considered a deviation from the present disclosure, and all such modifications are intended to be included within the scope of the present disclosure.

Example embodiments are provided so that the present disclosure will become thorough and fully convey the scope to those skilled in the art. For the thorough understanding of the embodiments of the present disclosure, numerous details are elucidated, such as examples of specific parts, devices and methods. Apparently, for those skilled in the art, specific details are not required. Example embodiments may be implemented in many different forms, and neither should be interpreted as limiting the scope of the present disclosure. In some example embodiments, well-known procedures, well-known device structures and well-known technologies are not described in detail.

Specialized vocabulary used here is merely used for describing particular example embodiments and is not intended to be limiting. Unless the context clearly indicates the contrary, singular forms "a", "an" and "the" used here may be intended to include plural forms. The terms "including" and "having" mean to include and thereby specify the presence of the described features, wholes, steps, operations, elements and/or components, but do not exclude the presence or additional presence of one or more other features, wholes, steps, operations, elements, components and/or combinations thereof. Unless the order of execution is explicitly indicated, the method steps, processing and operations described here are not necessarily to be construed as being executed in the particular order described and illustrated. It is also to be understood that additional or optional steps may be used.

When an element or layer is described as "on", "engaged with", "connected to" or "joined to" another element or layer, the element or layer may be directly on the particular element or layer, the element or layer may be directly engaged with the particular element or layer, the element or layer may be directly connected to the particular element or layer, the element or layer may be directly joined to the particular element or layer, or intervening elements or layers may be present. However, when an element or layer is described as "directly on", "directly engaged with", "directly connected to" or "directly joined to" another element or layer, intervening elements or layers may not be present. Other words used for describing element relationships should be explained in a similar manner (such as "between", "directly between", "adjacent" or "directly adjacent"). The term "and/or" used herein includes any and all combinations of one or more of the associated listed items. Although the terms of first, second and third are possibly used here for describing various elements, components, regions, layers and/or portions, these elements, components, regions, layers and/or portions are not limited by these terms. These terms may be merely used for distinguishing one element, component, region or portion from another. Unless clearly indicated by the context, the terms such as "first", "second", and other numerical value terms used here do not indicate a sequence or order. Therefore, a first element, component, region, layer or portion that is described below may use the term of a second element, component, region, layer or portion without departing from the guidance of the example embodiments.

Relative spatial terms such as "inside", "outside", "below", "under", "lower part", "over" or "upper part" may be used here for ease of description to describe a relationship between one element or feature and another or more elements or features, as shown in the figures. The relative spatial terms may be intended to include different orientations of a device, in addition to those depicted in the figures. For example, if the device in the figures is flipped, an element described as being "under another element or feature" or "below another element or feature" is oriented as "over the particular element or feature". Therefore, the example term "under" may include two orientations: upwards and downwards. The device may be otherwise oriented (rotated by 90 degrees or otherwise oriented) and explained by a relative description of the space here.

**Claims**

1. A telecentric lens system, comprising a front group (T1), a middle group (P), a diaphragm (S) and a rear group (T2), wherein

   the front group (T1), the middle group (P), the diaphragm (S) and the rear group (T2) are sequentially arranged from an object plane side of the telecentric lens system to an image plane side of the telecentric lens system; the front group (T1) has positive focal power, the rear group (T2) has negative focal power, and the diaphragm (S) is located on an image focal plane of the front group (T1); and a focal length of the telecentric lens system is f, a focal length of the front group (T1) is $f_{T1}$, a focal length of the rear group (T2) is $f_{T2}$, and $f_{T1}$ and $f_{T2}$ separately satisfy following relationships with f:

$$0.80 < |f_{T1}/f| < 1.20, \text{ and } 3.00 < |f_{T2}/f| < 4.00.$$

2. The telecentric lens system according to claim 1, wherein the middle group (P) is a splitting prism or a flat lens.

3. The telecentric lens system according to claim 2, wherein the front group (T1) comprises a first lens (G1), a second lens (G2), a third lens (G3), a fourth lens (G4), a fifth lens (G5) and a sixth lens (G6), wherein

   the first lens (G1), the second lens (G2), the fourth lens (G4) and the sixth lens (G6) each have positive focal power and a biconvex structure, and the third lens (G3) and the fifth lens (G5) each have negative focal power and a biconcave structure; the second lens (G2) and the third lens (G3) are cemented together to form a first cemented lens group (U1) having negative focal power; and the fourth lens (G4) and the fifth lens (G5) are cemented together to form a second cemented lens group (U2) having positive focal power.

4. The telecentric lens system according to claim 3, wherein the rear group (T2) comprises a seventh lens (G7) and an eighth lens (G8), wherein
   the seventh lens (G7) has negative focal power and a biconcave structure, and the eighth lens (G8) has positive focal power and a biconvex structure.

5. The telecentric lens system according to claim 4, wherein a distance L from a front surface vertex of the first lens (G1) to a rear surface vertex of the eighth lens (G8) satisfies a following relationship with f:

$$|L/f| > 1.70.$$

6. The telecentric lens system according to claim 5, wherein a back focal length, BFL, from the rear surface vertex of the eighth lens (G8) to an image plane of the telecentric lens system satisfies a following relationship with f:

$$|BFL/f| < 0.50.$$

7. The telecentric lens system according to claim 6, wherein a half image height y' of the telecentric lens system satisfies a following relationship with f:

$$|y'/f| < 0.20.$$

8. The telecentric lens system according to claim 7, wherein a focal length of the first lens (G1) is $f_{G1}$, and $f_{G1}$ satisfies a following relationship with f:

$$1.00 < |f_{G1}/f| < 1.40;$$

   a focal length of the first cemented lens group (U1) is $f_{U1}$, and $f_{U1}$ satisfies a following relationship with f:

$$1.90 < |f_{U1}/f| < 2.40;$$

a focal length of the second cemented lens group (U2) is $f_{U2}$, and $f_{U2}$ satisfies a following relationship with f: $14.00 < |f_{U2}/f| < 15.00;$

a focal length of the sixth lens (G6) is $f_{G6}$, and $f_{G6}$ satisfies a following relationship with f:

$$1.00 < |f_{G6}/f| < 1.50;$$

a focal length of the seventh lens (G7) is $f_{G7}$, and $f_{G7}$ satisfies a following relationship with f:

$$0.20 < |f_{G7}/f| < 0.50;$$

and
a focal length of the eighth lens (G8) is $f_{G8}$, and $f_{G8}$ satisfies a following relationship with f:

$$0.40 < |f_{G8}/f| < 0.80.$$

9. The telecentric lens system according to claim 8, wherein a shape of an aperture of the diaphragm (S) is circular, and the aperture of the diaphragm (S) is an F7.0 aperture.

U1 U2

G1 G2 G3 G4 G5 G6

Object
plane

P S

G7 G8

Image
plane

T1

WD

L

T2

BFL

**FIG. 1**

Coaxial light
source
emitting plane

U1 U2

G1 G2 G3 G4 G5 G6

Object
plane

P S

G7 G8

Image
plane

T1

WD

L

T2

BFL

**FIG. 2**

FIG. 3

Distortion

+Y

-0.2                    0                    0.2

Percent

**FIG. 4**

FIG. 5

## INTERNATIONAL SEARCH REPORT

| | International application No. |
|---|---|
| | **PCT/CN2022/095226** |

**A.    CLASSIFICATION OF SUBJECT MATTER**

G02B 13/22(2006.01)i;   G02B 13/00(2006.01)i

According to International Patent Classification (IPC) or to both national classification and IPC

**B.    FIELDS SEARCHED**

Minimum documentation searched (classification system followed by classification symbols)

G02B13

Documentation searched other than minimum documentation to the extent that such documents are included in the fields searched

Electronic data base consulted during the international search (name of data base and, where practicable, search terms used)

CNTXT; CNABS; VEN; ENTXT: 远心, 前, 第一, 第1, 组, 后, 第二, 第2, 第三, 第3, 正, 负, 光阑, 光圈, telecentric, lens, front +, diaphragm+, rear+, postive, negative, first+, second+, third+

**C.    DOCUMENTS CONSIDERED TO BE RELEVANT**

| Category* | Citation of document, with indication, where appropriate, of the relevant passages | Relevant to claim No. |
|---|---|---|
| PX | CN 113933978 A (OPT MACHINE VISION TECHNOLOGY CO., LTD.) 14 January 2022 (2022-01-14)<br>claims 1-9 | 1-9 |
| A | CN 107884916 A (FUJIAN FORECAM OPTICAL TECHNOLOGY CO., LTD.) 06 April 2018 (2018-04-06)<br>description, paragraphs 15-24, and figure 1 | 1-9 |
| A | CN 111399198 A (OPT MACHINE VISION TECHNOLOGY CO., LTD.) 10 July 2020 (2020-07-10)<br>entire document | 1-9 |
| A | CN 108873274 A (SUZHOU PTC OPTICAL INSTRUMENT CO., LTD.) 23 November 2018 (2018-11-23)<br>entire document | 1-9 |
| A | CN 102645749 A (ZHANG JIAGANG PENGBO PHOTOELECTRIC TECHNOLOGY CO., LTD.) 22 August 2012 (2012-08-22)<br>entire document | 1-9 |
| A | CN 108107557 A (FOSHAN HUAGUO OPTICAL CO., LTD.) 01 June 2018 (2018-06-01)<br>entire document | 1-9 |

☑ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 July 2022** | **28 July 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/095226** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 109254388 A (FUJIAN FORECAM OPTICAL TECHNOLOGY CO., LTD.) 22 January 2019 (2019-01-22)<br>entire document | 1-9 |
| A | CN 110058387 A (IVIEW DISPLAYS (SHENZHEN) CO., LTD.) 26 July 2019 (2019-07-26)<br>entire document | 1-9 |
| A | JP 2021105634 A (CANON K. K.) 26 July 2021 (2021-07-26)<br>entire document | 1-9 |
| A | CN 211426884 U (SUZHOU AIXIAN OPTOELECTRONICS TECHNOLOGY CO., LTD.) 04 September 2020 (2020-09-04)<br>entire document | 1-9 |
| A | US 4189211 A (KOLLMORGEN CORP.) 19 February 1980 (1980-02-19)<br>entire document | 1-9 |
| A | CN 109633874 A (OPT MACHINE VISION TECHNOLOGY CO., LTD.) 16 April 2019 (2019-04-16)<br>entire document | 1-9 |

Form PCT/ISA/210 (second sheet) (January 2015)

### INTERNATIONAL SEARCH REPORT
**Information on patent family members**

| International application No. |
| --- |
| **PCT/CN2022/095226** |

| Patent document cited in search report | | | Publication date (day/month/year) | Patent family member(s) | | | Publication date (day/month/year) |
| --- | --- | --- | --- | --- | --- | --- | --- |
| CN | 113933978 | A | 14 January 2022 | None | | | |
| CN | 107884916 | A | 06 April 2018 | None | | | |
| CN | 111399198 | A | 10 July 2020 | None | | | |
| CN | 108873274 | A | 23 November 2018 | None | | | |
| CN | 102645749 | A | 22 August 2012 | None | | | |
| CN | 108107557 | A | 01 June 2018 | None | | | |
| CN | 109254388 | A | 22 January 2019 | None | | | |
| CN | 110058387 | A | 26 July 2019 | US | 2022019062 | A1 | 20 January 2022 |
| | | | | WO | 2020199685 | A1 | 08 October 2020 |
| JP | 2021105634 | A | 26 July 2021 | None | | | |
| CN | 211426884 | U | 04 September 2020 | None | | | |
| US | 4189211 | A | 19 February 1980 | None | | | |
| CN | 109633874 | A | 16 April 2019 | None | | | |

Form PCT/ISA/210 (patent family annex) (January 2015)